# EUROPÄISCHE PATENTSCHRIFT

(11) **EP 2 884 050 B1**
(45) Veröffentlichungstag und Bekanntmachung des Hinweises auf die Patenterteilung: **15.03.2017**
(21) Anmeldenummer: 14178015.5
(22) Anmeldetag: 22.07.2014
(51) Int. Cl.: F01D 5/22, F01D 5/26, F01D 5/28, F04D 29/02, F04D 29/32, F04D 29/54, F04D 29/66

(54) **Schaufelgitter und zugehöriges Verfahren**
Cascade and associated method
Grille d'aube et procédé associé

(30) Priorität: 16.12.2013 DE 102013226015
(43) Veröffentlichungstag der Anmeldung: 17.06.2015
(73) Patentinhaber: MTU Aero Engines AG, 80995 München (DE)
(72) Erfinder: Hartung, Andreas, 81829 München (DE); Stiehler, Frank, 04924 Bad Liebenwerda (DE); Pernleitner, Martin, 85221 Dachau (DE)

(56) Entgegenhaltungen:
- EP-A1- 2 161 410
- EP-A1- 2 505 780
- EP-A2- 1 154 125
- EP-A2- 1 205 633
- EP-A2- 1 217 170

## Beschreibung

Die Arbeiten, die zu dieser Erfindung geführt haben, wurden gemäß der Finanzhilfevereinbarung Nr. CSJU-GAM-SAGE-2008-001 im Zuge des Siebten Rahmenprogramms der Europäischen Union (FP7/2007-2013) für Clean Sky Joint Technology Initiative gefördert.

Die vorliegende Erfindung betrifft ein Schaufelgitter für eine Turbomaschine, eine Turbomaschine, insbesondere eine Gasturbine, mit einem solchen Schaufelgitter, sowie ein Verfahren zur Herstellung eines solchen Schaufelgitters. Ein Schaufelgitter nach dem Oberbegriff von Anspruch 1 ist aus der EP 1 217 170 A2 bekannt. Der Vollständigkeit halber sei zudem auch noch auf die Druckschrift EP 2 505 780 A1 hingewiesen.

Aus betriebsinterner Praxis ist es bekannt, insbesondere thermomechanisch hochbelastete Turbinenstufen-Laufschaufeln von Gasturbinen aus monokristallinen Werkstoffen mit vorgegebener Kristallorientierung herzustellen.

Dabei wird die Kristallorientierung hergestellter Schaufeln geprüft. Genügt diese einer vorgegebenen Tolerierung, wird die Schaufel verbaut, andernfalls verworfen. Dies führt zu einer stochastischen Verteilung der Kristallorientierungen innerhalb des Schaufelgitters.

Auf der anderen Seite ist es aus betriebsinterner Praxis bekannt, die Schaufeln eines Schaufelgitters gegeneinander zu verstimmen, insbesondere um das Schwingungsverhalten des Gitters zu verbessern.

Insbesondere hierzu ist es aus betriebsinterner Praxis bekannt, an Schaufeln Körper beweglich zu lagern. Gleichermaßen ist es aus betriebsinterner Praxis bekannt, an Schaufeln Körper beweglich zu lagern, um Schaufelschwingungen dissipativ zu dämpfen und/oder um gezielt eine Verstemmung herbeizuführen so dass die Energieaufnahme der Schaufel verringert wird.

Eine Aufgabe einer Ausführung der vorliegenden Erfindung ist es, eine verbesserte Turbomaschine zur Verfügung zu stellen.

Diese Aufgabe wird durch ein Schaufelgitter mit den Merkmalen des Anspruchs 1 gelöst. Die Ansprüche 13, 14 stellen eine Turbomaschine mit einem entsprechenden Schaufelgitter bzw. ein Verfahren zur Herstellung eines entsprechenden Schaufelgitters unter Schutz. Vorteilhafte Ausführungsformen der Erfindung sind Gegenstand der Unteransprüche.

Nach einem Aspekt der vorliegenden Erfindung weist eine Turbomaschine wenigstens ein Schaufelgitter auf. Die Turbomaschine ist in einer Ausführung eine Gasturbine, insbesondere eine Flugtriebwerk-Gasturbine. Das Schaufelgitter ist in einer Ausführung ein Lauf- oder Leitgitter einer Turbinen- oder Verdichterstufe der Gasturbine, insbesondere Flugtriebwerk-Gasturbine.

Das Schaufelgitter weist eine Anzahl von Schaufeln auf, die einen monokristallinen Werkstoff aufweisen. In einer Ausführung besteht das Schaufelgitter aus dieser Anzahl von Schaufeln bzw. alle Schaufeln weisen einen, vorzugsweise denselben, monokristallinen Werkstoff, auf. In einer Ausführung bestehen ein oder mehrere, insbesondere alle, Schaufeln, wenigstens im Wesentlichen, aus einem, insbesondere demselben, monokristallinen Werkstoff, in einer anderen Ausführung können auch beispielsweise nur Schaufelblätter der Schaufeln den monokristallinen Werkstoff aufweisen, insbesondere hieraus bestehen. In einer Ausführung weist der monokristalline Werkstoff eine Ni-, Fe-, Ti-, Al-, Co-, Nb- und/oder Mo-Legierung, insbesondere Superlegierung, auf, beispielsweise CMSX-2, CMSX-3, PWA 1426, PWA 1480, PWA 1484, Rene oder CM 186 LC oder dergleichen, oder besteht hieraus.

Jede der Schaufeln weist einen Kristallorientierungswert auf, der von einer Kristallorientierung des monokristallinen Werkstoffs dieser Schaufel abhängt, insbesondere dergleichen Kristallorientierung. Die Kristallorientierung des monokristallinen Werkstoffs im Sinne der vorliegenden Erfindung kann insbesondere von einer Abweichung einer, insbesondere dergleichen, Kristallrichtung des monokristallinen Werkstoffs von einer, insbesondere dergleichen, Profilrichtung eines Schaufelblattes der Schaufel abhängen, insbesondere diese beschreiben. Die Kristallrichtung kann insbesondere die [001]-Richtung, [100]-Richtung, [110]-Richtung, [111]-Richtung, [112]-Richtung, [123]-Richtung oder dergleichen sein, wobei die Angabe "[XYZ]" die fachüblichen Millerschen Indizes bezeichnen, die auch als "<XYZ>" angegeben werden. Die Profilrichtung kann insbesondere die radiale Richtung, die Richtung der sogenannten Stapel- bzw. Fädelachse, die Umfangsrichtung, die Richtung einer Profilsehne des Schaufelblattes oder dergleichen sein. Insbesondere kann also die Kristallorientierung im Sinne der vorliegenden Erfindung von einer Abweichung bzw. einem Winkel zwischen der [001]-Richtung des monokristallinen Werkstoffs der Schaufel und der Stapelachse des Schaufelblattes der Schaufel abhängen, insbesondere diese(n) beschreiben, die bzw. der auch als primäre Kristallorientierung bezeichnet wird. Gleichermaßen kann die Kristallorientierung insbesondere von einer Abweichung bzw. einem Winkel zwischen der [100]-Richtung des monokristallinen Werkstoffs der Schaufel und der Profilsehne des Schaufelblattes der Schaufel abhängen, insbesondere diese(n) beschreiben, die bzw. der auch als sekundäre Kristallorientierung bezeichnet wird. Der Kristallorientierungswert einer Schaufel im Sinne der vorliegenden Erfindung kann entsprechend in einer Ausführung von einer solchen Abweichung, insbesondere ihrem Betrag, abhängen, insbesondere diese(n) beschreiben. In einer Weiterbildung umfasst, insbesondere ist, der Kristallorientierungswert den/der entsprechende(n) Winkel oder dessen Betrag. Im Weiteren wird zur kompakteren Darstellung der Kristallorientierungswert mit |α| bezeichnet, wie dies insbesondere für die primäre Kristallorientierung üblich ist.

Nach einer bevorzugten Ausführungsform der vorliegenden Erfindung werden bzw. sind die Schaufeln entsprechend ihrer Kristallorientierung bzw. ihres Kristallorientierungswertes sortiert und anschließend entsprechend ihrer Kristallorientierungswerte in Sektoren des Schaufelgitters angeordnet. Auf diese Weise können insbesondere gezielt bzw. planmäßig Schaufeln ähnlicher Kristallorientierungen zusammengefasst werden bzw. sein.

Überraschenderweise hat sich gezeigt, dass hierdurch gegenüber einer rein stochastischen und somit statistisch verstimmten Verteilung der Kristallorientierungen innerhalb des Gitters insbesondere dessen Schwingungsverhalten verbessert werden kann, insbesondere in Bezug auf Resonanzen und/oder Flattern. Zusätzlich oder alternativ können so größere Toleranzen in der Kristallorientierung zugelassen werden, indem Schaufeln mit größeren Kristallorientierungswerten nicht verworfen, sondern in entsprechenden Sektoren zusammengefasst werden. Dies kann insbesondere eine Ausschussrate bei der Fertigung der Schaufeln mit monokristallinem Werkstoff und so deren Kosten reduzieren.

Das Sortieren der Schaufeln entsprechend ihrer Kristallorientierung kann insbesondere ein zerstörungsfreies Ermitteln der Kristallorientierung, beispielsweise der primären Kristallorientierung, und ein anschließendes Ordnen der Schaufeln entsprechend ihrer Kristallorientierung bzw. ihres Kristallorientierungswertes umfassen. So kann die Kristallorientierung beispielsweise mittels des Laue-Verfahrens ermittelt werden. Das Ordnen kann ein Reihen der Schaufeln nach ihren Kristallarientierungswerten, beispielsweise in aufsteigender Reihenfolge, umfassen, insbesondere sein, so dass für die gereihten Schaufeln i = 1, 2, ...n gilt: |α₁| ≤ |α₂| ≤ ... ≤ |αₙ|. Gleichermaßen kann das Ordnen in einer Ausführung ein Klassieren der Schaufeln in Klassen A, B,... umfassen, insbesondere sein, so dass für die klassifizierten Schaufeln i = 1, 2, ...n gilt: i ∈ A ⇔ α_{A0} ≤ |αᵢ| ≤ α_{A1}, i ∈ B ⇔ α_{B0} ≤ |αᵢ| ≤ α_{B1}, mit den Klassengrenzen α_{A0}, α_{A1}, α_{B0}, α_{B1}, .... Innerhalb eines Sektors können die, insbesondere gereihten, Schaufeln in ihrer Reihenfolge angeordnet werden. Gleichermaßen können die, insbesondere klassifizierten, Schaufeln innerhalb eines Sektors auch unregelmäßig angeordnet werden, insbesondere, um das Schaufelgitter auszuwuchten oder dergleichen.

Zur kompakteren Darstellung werden nachfolgend ohne Beschränkung der Allgemeinheit Schaufeln des Schaufelgitters, deren Kristallorientierungswert kleiner als ein erster Grenzwert ist, als erste Schaufeln bezeichnet, Schaufeln des Schaufelgitters, deren Kristallorientierungswert wenigstens gleich dem ersten Grenzwert ist, als zweite Schaufeln.

Nach einer Ausführungsform der vorliegenden Erfindung weist das Schaufelgitter wenigstens einen, insbesondere genau einen oder mehrere, erste Sektor(en) auf, der bzw. die aus wenigstens drei, insbesondere wenigstens vier oder wenigstens fünf, in Umfangsrichtung aufeinanderfolgenden bzw. benachbarten ersten Schaufeln besteht bzw. bestehen. Zusätzlich weist das Schaufelgitter wenigstens einen, insbesondere genau einen oder mehrere, zweite(n) Sektor(en) auf, der bzw. die aus wenigstens drei, insbesondere wenigstens vier oder wenigstens fünf, in Umfangsrichtung aufeinanderfolgenden bzw. benachbarten zweiten Schaufeln besteht bzw. bestehen. Indem die sortierten Schaufeln entsprechend ihrer Kristallorientierungswerte in Sektoren angeordnet werden bzw. sind, ergeben sich entsprechend ein oder mehrere erste und ein oder mehrere zweite Sektor(en), in denen ausschließlich erste bzw. zweite Schaufeln zusammengefasst bzw. in Umfangsrichtung aufeinanderfolgend angeordnet sind. Hierdurch können/kann, wie vorstehend erläutert, überraschenderweise das Schwingungsverhalten des Schaufelgitters verbessert und/oder Kosten reduziert werden.

In einer Ausführung kann das Schaufelgitter aus einem ersten Sektor und einem zweiten Sektor bestehen. Mit anderen Worten kann das Schaufelgitter virtuell in zwei Teile mit je wenigstens drei, insbesondere wenigstens vier oder wenigstens fünf, aufeinanderfolgenden bzw. benachbarten Schaufeln geteilt werden, wobei alle Schaufeln des einen Teils Kristallorientierungswerte aufweisen, die kleiner als ein Grenzwert sind, während alle Schaufeln des anderen, komplementären Teils Kristallorientierungswerte aufweisen, die wenigstens gleich diesem Grenzwert sind. Wie nachfolgend noch näher erläutert, können mehrere solche virtuellen Teilungen möglich sein.

In entsprechender Weise kann in einer Ausführung das Schaufelgitter aus zwei oder drei, insbesondere voneinander getrennten, ersten Sektoren und zwei oder drei, insbesondere voneinander getrennten, zweiten Sektoren bestehen. Mit anderen Worten kann das Schaufelgitter virtuell in beispielsweise vier Teile mit je wenigstens drei aufeinanderfolgenden bzw. benachbarten Schaufeln geteilt werden, wobei alle Schaufeln von zwei getrennten Teilen Kristallorientierungswerte aufweisen, die kleiner als ein Grenzwert sind, während alle Schaufeln der anderen beiden getrennten Teile Kristallorientierungswerte aufweisen, die wenigstens gleich diesem Grenzwert sind.

Die Zusammenfassung von Schaufeln zu Sektoren von wenigstens drei, insbesondere wenigstens vier oder wenigstens fünf, aufeinanderfolgenden Schaufeln ähnlicher Kristallorientierung kann in einer Ausführung weiter differenziert werden bzw. sein. Insbesondere können die zweiten Schaufeln entsprechend ihrer Kristallorientierung noch weiter in erste zweite Schaufeln, deren Kristallorientierungswert wenigstens gleich dem ersten Grenzwert und zugleich kleiner als ein zweiter Grenzwert ist, und zweite zweite Schaufeln unterteilt werden, deren Kristallorientierungswert wenigstens gleich dem zweiten Grenzwert ist. Zur kompakteren Darstellung werden diese zweiten zweiten Schaufeln des Schaufelgitters, nachfolgend auch kurz als dritte Schaufeln bezeichnet. Erste zweite Schaufeln und zweite zweite Schaufeln bilden somit zusammen die zweiten Schaufeln.

Entsprechend weist das Schaufelgitter in einer Ausführung wenigstens einen, insbesondere genau einen oder mehrere, erste(n) zweite(n) Sektor(en) auf, der bzw. die jeweils aus wenigstens drei, insbesondere wenigstens vier oder wenigstens fünf, in Umfangsrichtung aufeinanderfolgenden bzw. benachbarten ersten zweiten Schaufeln besteht bzw. bestehen, und wenigstens einen, insbesondere genau einen oder mehrere, zweite(n) zweite(n) bzw. dritte(n) Sektor(en), der bzw. die jeweils aus wenigstens drei, insbesondere wenigstens vier oder wenigstens fünf, in Umfangsrichtung aufeinanderfolgenden bzw. benachbarten zweiten zweiten bzw. dritten Schaufeln besteht bzw. bestehen und nachfolgend auch kurz als dritte(r) Sektor(en) bezeichnet werden bzw. wird.

In einer Ausführung kann das Schaufelgitter aus einem ersten Sektor, einem ersten zweiten Sektor und einem zweiten zweiten Sektor bestehen. Mit anderen Worten kann das Schaufelgitter virtuell in drei Teile mit je wenigstens drei, insbesondere wenigstens vier oder wenigstens fünf, aufeinanderfolgenden bzw. benachbarten Schaufeln geteilt werden, wobei alle Schaufeln des einen Teils Kristallorientierungswerte aufweisen, die kleiner als ein Grenzwert sind, alle Schaufeln eines weiteren Teils Kristallorientierungswerte aufweisen, die wenigstens gleich diesem Grenzwert und zugleich kleiner als ein weiterer Grenzwert sind, während alle Schaufeln des dritten Teils Kristallorientierungswerte aufweisen, die wenigstens gleich diesem weiteren Grenzwert sind. Gleichermaßen kann das Schaufelgitter statt einem auch zwei oder drei erste Sektoren, statt einem auch zwei oder drei erste zweite Sektoren und/oder statt einem auch zwei oder drei zweite zweite Sektoren aufweisen. Entsprechend kann das Schaufelgitter insbesondere aus zwei oder drei, insbesondere voneinander getrennten, ersten Sektoren, zwei oder drei, insbesondere voneinander getrennten, ersten zweiten Sektoren und/oder zwei oder drei, insbesondere voneinander getrennten, zweiten zweiten Sektoren bestehen.

Das Sortieren kann nach einem oder mehreren vorab vorgegebenen Grenzwerten erfolgen, so dass Schaufeln von vorneherein bestimmten Sektoren zugeteilt werden können. Gleichermaßen können beispielsweise auch zunächst die Schaufeln entsprechend ihrer Kristallorientierungswerte gereiht oder klassifiziert, anschließend ein oder mehrere Grenzwerte entsprechend der Häufigkeitsverteilung der Kristallorientierungswerte vorgegeben und die Schaufeln anschließend entsprechend dieser Grenzwerte bestimmten Sektoren zugeteilt werden. Weisen beispielsweise von 90 hergestellten Schaufeln 60 Schaufeln Kristallorientierungswerte |αᵢ| < x und davon wiederum 30 Schaufeln Kristallorientierungswerte |αᵢ| < y < x auf, so kann y ein erster Grenzwert, x ein zweiter Grenzwert sein, nach dem bzw. denen die 90 Schaufeln ersten und zweiten, oder ersten und zweiten zweiten, Sektoren zugeteilt bzw. in diesen angeordnet werden.

Insbesondere, wenn Grenzwerte vorab vorgegeben werden, kann in einer Ausführung ein, insbesondere erster und/oder zweiter, Grenzwert wenigstens 10%, insbesondere wenigstens 25%, eines maximalen Kristallorientierungswertes des Schaufelgitters, insbesondere des Kristallorientierungswertes derjenigen Schaufel des Schaufelgitters mit dem größten Kristallorientierungswert unter allen Schaufeln des Schaufelgitters oder eines maximal zulässigen Kristallarientierungswertes für das Schaufelgitter betragen. Zusätzlich oder alternativ kann in einer Ausführung der, insbesondere erste und/oder zweite, Grenzwert höchstens 90%, insbesondere höchstens 75%, des maximalen Kristallorientierungswertes des Schaufelgitters betragen. Beträgt beispielsweise die primäre Kristallorientierung im Schaufelgitter maximal 15° oder ist für die primäre Kristallorientierung im Schaufelgitter eine Obergrenze von 15° vorgegeben, so kann in einer Ausführung ein erster Grenzwert 8° = 15°-53%, ein zweiter Grenzwert 12° = 15°·80% betragen.

Insbesondere, wenn Grenzwerte entsprechend der Häufigkeitsverteilung der Kristallorientierungswerte vorgegeben werden, können in einer Ausführung die Schaufeln eines ersten Sektors oder aller ersten Sektoren jeweils oder zusammen wenigstens 20%, insbesondere wenigstens 35% der Anzahl der Schaufeln des Schaufelgitters bilden. Zusätzlich oder alternativ können die Schaufeln des ersten Sektors bzw. aller ersten Sektoren jeweils oder zusammen höchstens 80%, insbesondere höchstens 65% der Anzahl der Schaufeln des Schaufelgitters bilden. Zusätzlich oder alternativ können in einer Ausführung die Schaufeln eines zweiten Sektors oder aller zweiten Sektoren, insbesondere erster und/zweiter zweiter Sektoren, jeweils oder zusammen wenigstens 20%, insbesondere wenigstens 35%, und/oder höchstens 80%, insbesondere höchstens 65% der Anzahl der Schaufeln des Schaufelgitters bilden.

Innerhalb eines Sektors oder mehrerer, insbesondere aller Sektoren des Schaufelgitters können in einer Ausführung die Kristallorientierungswerte der Schaufeln regelmäßig, insbesondere in einer monotonen Reihenfolge angeordnet sein, insbesondere in Rotationsrichtung monoton zu- oder abnehmend. In einer anderen Ausführung sind die Kristallorientierungen unregelmäßig verteilt bzw. die Kristallorientierungswerte der Schaufeln eines Sektors oder mehrerer, insbesondere aller Sektoren des Schaufelgitters unregelmäßig angeordnet. Dies kann insbesondere vorteilhaft sein, um durch entsprechende Umordnung der Schaufeln innerhalb der Sektoren das Schaufelgitter auszuwuchten.

Wie einleitend betont, besteht in einer Ausführung das Schaufelgitter aus den vorstehend erläuterten Sektoren, d.h. alle Schaufeln des Schaufelgitters sind zu entsprechenden Sektoren zusammengefasst. In einer anderen Ausführung kann das Schaufelgitter außer den vorstehend erläuterten Sektoren noch weitere Schaufeln aufweisen, die in einer Weiterbildung insbesondere einzeln oder paarweise zwischen ersten und zweiten Sektoren und/oder zwischen ersten und zweiten zweiten Sektoren mit je wenigstens drei, insbesondere wenigstens vier oder wenigstens fünf, Schaufeln ähnlicher Kristallorientierung angeordnet sein können. Auch hierdurch können die vorstehend erläuterten Vorteile noch, wenigstens teilweise, erreicht werden, wobei auf der anderen Seite die Flexibilität bei der Anordnung der Schaufeln vorteilhaft erhöht werden kann.

Erfindungsgemäß weisen zwei oder mehr der Schaufeln, insbesondere alle Schaufeln der Anzahl, jeweils eine Körperanordnung mit je einem oder mehreren an der Schaufel beweglich gelagerten Körper(n) auf.

Einer oder mehrere dieser Körper, insbesondere all diese Körper, können in einer Ausführung an radial innen von Schaufelblättern der Schaufeln angeordneten Schaufelplattformen der Schaufeln des Schaufelgitters beweglich gelagert sein bzw. werden, insbesondere in einem oder mehreren Hohlräumen in den Schaufelplattformen und/oder in Hohlräumen aufgenommen sein bzw. werden, die zwischen benachbarten Schaufelplattformen ausgebildet sind bzw. werden.

Gleichermaßen können einer oder mehrere dieser Körper, insbesondere all diese Körper, an radial außen von Schaufelblättern der Schaufeln angeordneten Außendeckbändern der Schaufeln des Schaufelgitter beweglich gelagert sein bzw. werden, insbesondere in einem oder mehreren Hohlräumen in den Außendeckbändern und/oder in Hohlräumen, die zwischen benachbarten Außendeckbändern ausgebildet sind bzw. werden, aufgenommen sein bzw. werden.

In einem Hohlraum können jeweils nur ein oder auch mehrere Körper beweglich gelagert, insbesondere mit Spiel bzw. einem Bewegungsfreiheitsgrad in einer oder mehreren Richtungen angeordnet bzw. aufgenommen sein. An, insbesondere in einer Schaufel können jeweils ein oder mehrere solcher Hohlräume ausgebildet sein.

Erfindungsgemäß sind unterschiedliche Körperanordnungen vorgesehen, insbesondere erste Körperanordnungen mit je einem oder mehreren beweglich gelagerten ersten Körpern und hiervon verschiedene zweite Körperanordnungen mit je einem oder mehreren beweglich gelagerten zweiten Körpern.

Erste und hiervon verschiedene zweite Körperanordnungen können sich insbesondere in der Anzahl von Körpern, die an der jeweiligen Schaufel beweglich gelagert, insbesondere in Hohlräumen aufgenommen sind, unterscheiden. So können beispielsweise erste Körperanordnungen alle höchstens eine vorgegebene Maximalzahl von beweglich gelagerten ersten Körpern und zweite Körperanordnungen alle mehr als diese vorgegebene Maximalzahl von beweglich gelagerten zweiten Körpern aufweisen oder umgekehrt zweite Körperanordnungen alle höchstens eine vorgegebene Maximalzahl von beweglich gelagerten zweiten Körpern und erste Körperanordnungen alle mehr als diese vorgegebene Maximalzahl von beweglich gelagerten ersten Körpern aufweisen.

Zusätzlich oder alternativ können erste und hiervon verschiedene zweite Körperanordnungen sich insbesondere in der Größer, Masse, Massenverteilung und/oder Form eines oder mehrerer, insbesondere aller ihrer beweglich gelagerten Körper unterscheiden.

So können beispielsweise ein oder mehrere, insbesondere alle, erste Körper der ersten Körperanordnungen größer oder kleiner und/oder schwerer oder leichter sein als ein oder mehrere, insbesondere alle, zweiten Körper der zweiten Körperanordnungen. Zusätzlich oder alternativ können ein oder mehrere, insbesondere alle, erste Körper der ersten Körperanordnungen eine andere Massenverteilung und/oder Form aufweisen als ein oder mehrere, insbesondere alle, zweiten Körper der zweiten Körperanordnungen.

Zusätzlich oder alternativ können erste und hiervon verschiedene zweite Körperanordnungen sich insbesondere in der Orientierung eines oder mehrerer, insbesondere aller ihrer beweglich gelagerten Körper relativ zu einem diesen Körper aufnehmenden Hohlraum unterscheiden. Insbesondere können in einer Ausführung erste und zweite Körper, wenigstens im Wesentlichen, baugleich und in verschiedener, insbesondere spiegelbildlicher Orientierung in dem jeweiligen Hohlraum aufgenommen, insbesondere geführt, sein bzw. werden. Sind beispielsweise erste und zweite Körper zylindrisch mit einem Abschnitt mit einem größeren Durchmesser und einem anschließenden Abschnitt mit einem kleineren Durchmesser in einem zylindrischen Hohlraum mit dem größeren Durchmesser in dessen Längsrichtung beweglich gelagert, so können die ersten Körper mit dem Abschnitt mit dem größeren Durchmesser und die zweiten Körper mit dem Abschnitt mit dem kleineren Durchmesser in oder entgegen einer Durchströmungsrichtung des Schaufelgitters in den Hohlräumen angeordnet sein bzw. werden.

Zusätzlich oder alternativ können erste und hiervon verschiedene zweite Körperanordnungen sich insbesondere in der Lagerung eines oder mehrerer, insbesondere aller ihrer beweglich gelagerten Körper in dem diesen Körper aufnehmenden Hohlraum unterscheiden, insbesondere in einem Reibwert und/oder einem Spiel bzw. Toleranzmaß der Oberflächenpaarung zwischen Körper und Hohlraum. Insbesondere können ein oder mehrere, insbesondere alle, erste Körper der ersten Körperanordnungen und die diese Körper aufnehmenden Hohlräume einen größeren oder kleineren Reibwert und/oder ein größeres oder kleineres Spiel in einer Führung aufweisen als ein oder mehrere, insbesondere alle, zweiten Körper der zweiten Körperanordnungen.

Erfindungsgemäß weisen nun eine oder mehrere erste Schaufeln jeweils eine der ersten Körperanordnungen und eine oder mehrere zweite Schaufeln jeweils eine der hiervon verschiedenen zweiten Körperanordnung auf.

Überraschenderweise hat sich gezeigt, dass durch eine planmäßige bzw. vorgegebene Zuordnung unterschiedlicher Körperanordnungen zu Schaufeln in Abhängigkeit von deren Kristallorientierung sowohl gegenüber gleichen Körperanordnungen für Schaufeln unterschiedlicher Kristallorientierung als auch gegenüber einer Zuordnung unterschiedlicher Körperanordnungen zu Schaufeln unabhängig von deren Kristallorientierung insbesondere das Schwingungsverhalten des Schaufelgitters verbessert werden kann, insbesondere in Bezug auf Resonanzen und/oder Flattern.

In einer Ausführung ist jeder erste Körper beweglich an einer ersten Schaufel gelagert und/oder jeder zweite Körper beweglich an einer zweiten Schaufel gelagert. Zusätzlich oder alternativ ist in einer Ausführung an jeder ersten Schaufel wenigstens ein erster Körper beweglich gelagert und/oder an jeder zweiten Schaufel wenigstens ein zweiter Körper beweglich gelagert. Wenn ein Körper zwischen einer ersten und zweiten Schaufel beweglich gelagert, insbesondere in einem Hohlraum zwischen der ersten und zweiten Schaufel aufgenommen wird bzw. ist, kann dies wahlweise ein erster, zweiter oder ein hiervon verschiedener dritter Körper sein.

Wie vorstehend erläutert, können die vorgenannten Aspekte vorteilhaft miteinander kombiniert, d.h. die Schaufeln entsprechend ihrer Kristallorientierung in Sektoren angeordnet und die Körperanordnungen entsprechend der Kristallorientierung der Schaufeln ausgebildet sein, so dass in einer Ausführung innerhalb eines oder mehrerer, insbesondere aller ersten Sektoren, insbesondere ausschließlich, erste Körperanordnungen und innerhalb eines oder mehrerer, insbesondere aller zweiter Sektoren, insbesondere ausschließlich, hiervon verschiedene zweite Körperanordnungen vorgesehen sind bzw. werden, wobei an Sektorgrenzen wahlweise keine, erste, zweite oder hiervon verschiedener dritte Körperanordnungen vorgesehen sein können.

Wenn die zweiten Schaufeln entsprechend ihrer Kristallorientierung noch weiter in erste zweite Schaufeln, deren Kristallorientierungswert wenigstens gleich dem ersten Grenzwert und zugleich kleiner als der zweite Grenzwert ist, und zweite zweite bzw. dritte Schaufeln unterteilt werden bzw. sind, deren Kristallorientierungswert wenigstens gleich dem zweiten Grenzwert ist, können in einer Ausführung ein oder mehrere, insbesondere alle ersten zweiten Schaufeln erste zweite Körperanordnungen und ein oder mehrere, insbesondere alle zweiten zweite bzw. dritten Schaufeln hiervon verschiedene zweite zweite Körperanordnungen aufweisen, wobei erste und zweite zweite Körperanordnungen sich in gleicher Weise voneinander unterscheiden können wie erste und zweite Körperanordnungen, also insbesondere eine unterschiedliche Anzahl von Körpern und/oder Körper unterschiedlicher Größe, Masse, Massenverteilung, Form, Orientierung und/oder Lagerung aufweisen können. Gleichermaßen kann vorgesehen sein, dass nur die ersten zweiten Schaufeln oder alternativ nur die zweiten zweiten Schaufeln zweite Körperanordnungen aufweisen.

Wie vorstehend mit Bezug auf den Aspekt der Aufteilung der Schaufeln in Sektoren erläutert, kann auch bezüglich der Zuordnung unterschiedlicher Körperanordnungen in Abhängigkeit von der Kristallorientierung in einer Ausführung ein, insbesondere erster und/oder zweiter, Grenzwert des Kristallorientierungswertes wenigstens 10%, insbesondere wenigstens 25%, eines maximalen Kristallorientierungswertes des Schaufelgitters, insbesondere des Kristallorientierungswertes derjenigen Schaufel des Schaufelgitters mit dem größten Kristallorientierungswert unter allen Schaufeln des Schaufelgitters oder eines maximal zulässigen Kristallorientierungswertes für das Schaufelgitter betragen. Zusätzlich oder alternativ kann in einer Ausführung der, insbesondere erste und/oder zweite, Grenzwert höchstens 90%, insbesondere höchstens 75%, des maximalen Kristallorientierungswertes des Schaufelgitters betragen.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: ein Verfahren zur Herstellung des Schaufelgitters der Fig. 2;
- Fig. 2: ein Schaufelgitter einer Turbomaschine ;
- Fig.: 3 Teile von zwei Schaufeln eines Schaufelgitters einer Turbomaschine nach einer Ausführung der vorliegenden Erfindung in einer perspektivischen Ansicht; und
- Fig. 4: eine Ansicht von radial innen auf die Schaufeln der Fig. 3.

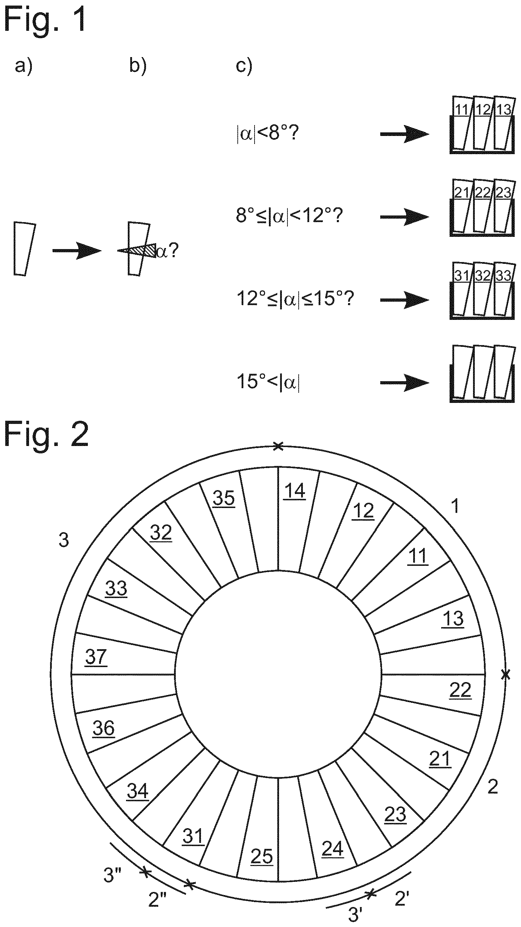

Fig. 2 zeigt ein Schaufelgitter einer Turbomaschine in einer Axialsicht, Fig. 1, insbesondere in Zusammenschau mit Fig. 2, ein Verfahren zur Herstellung dieses Schaufelgitters.

In einem ersten, in Fig. 1a) angedeuteten Schritt werden Schaufeln aus einem monokristallinen Werkstoff hergestellt. Für die hergestellten Schaufeln wird anschließend in einem in Fig. 1b) angedeuteten Schritt der Betrag ihrer primären Kristallorientierung als Kristallorientierungswert |α| ermittelt. Anschließend werden die Schaufeln in einem in Fig. 1c) angedeuteten Schritt entsprechend ihrer Kristallorientierung bzw. ihres Kristallorientierungswertes klassifiziert: liegt ihre primäre Kristallorientierung exemplarisch unter 8°, so werden die Schaufeln einer ersten Klasse zugeteilt, die im Beispiel die Schaufeln 11, 12 und 13 enthält. Beträgt ihre primäre Kristallorientierung wenigstens 8°, liegt jedoch exemplarisch unter 12°, so werden die Schaufeln einer zweiten Klasse zugeteilt, die im Beispiel die Schaufeln 21, 22 und 23 enthält. Beträgt ihre primäre Kristallorientierung wenigstens 12° und exemplarisch höchstens 15°, so werden die Schaufeln einer dritten Klasse zugeteilt, die im Beispiel die Schaufeln 31, 32 und 33 enthält. Liegt ihre primäre Kristallorientierung über 15°, so werden die Schaufeln als Ausschuss verworfen. Insbesondere dieser Schritt stellt ein Sortieren von Schaufeln entsprechend ihrer Kristallorientierung dar.

Zu Erläuterungszwecken gilt für die Schaufeln 11,...14, 21,...25, 31,...37, aus denen das Schaufelgitter der Fig. 2 besteht: |α₁₁| ≤ |α₁₂| ≤ |α₁₃| ≤ |α₁₄| < 8° ≤ |α₂₁| ≤ |a₂₂| ≤ |α₂₃| ≤ |α₂₄| ≤ |α₂₅| < 12° ≤ |α₃₁| ≤ |α₃₂| ≤ |α₃₃| ≤ |α₃₄| ≤ |α₃₅| ≤ |α₃₆| ≤ |α₃₇| ≤ 15°.

Die solcherart sortierten Schaufeln werden entsprechend ihrer Kristallorientierungswerte in drei Sektoren 1, 2, 3 angeordnet, aus denen das Schaufelgitter der Fig. 2 besteht. Dabei werden alle ersten Schaufeln 11,...14, deren Kristallorientierungswerte |α₁ᵢ|, i = 1,...4 kleiner als ein erster Grenzwert von 8° sind, in dem ersten Sektor 1 angeordnet, alle ersten zweiten Schaufeln 21,...25, deren Kristallorientierungswerte |α₂ᵢ|, i = 1,...5 wenigstens gleich dem ersten Grenzwert und zugleich kleiner als ein zweiter Grenzwert von 12° sind, in dem ersten zweiten Sektor 2 angeordnet, und alle zweiten zweiten bzw. kurz dritten Schaufeln 31,...37, deren Kristallorientierungswerte |α₃ᵢ|, i = 1,...7 wenigstens gleich dem zweiten Grenzwert sind, in dem zweiten zweiten bzw. kurz dritten Sektor 3 angeordnet.

Innerhalb dieser Sektoren können die Schaufeln beliebig angeordnet werden bzw. sein, insbesondere, um das Schaufelgitter auszuwuchten. Entsprechend sind die Kristallorientierungswerte der Schaufeln innerhalb der Sektoren unregelmäßig angeordnet, wie durch die Reihenfolge {14, 12, 11, 13; 22, 21, 23, 24, 25; 31, 34, 36, 37, 33, 32, 35} der Schaufeln in Umfangsrichtung in Fig. 2 angedeutet.

Entsprechend besteht das hergestellte Schaufelgitter der Fig. 2 aus einer Anzahl von 16 Schaufeln 14, 12, 11, 13; 22, 21, 23, 24, 25; 31, 34, 36, 37, 33, 32, 35 aus einem monokristallinen Werkstoff, wobei jede Schaufel einen Kristallorientierungswert |α| aufweist, der von ihrer primären Kristallorientierung abhängt. Dabei sind die Kristallorientierungswerte der ersten Schaufeln 11,...14 kleiner als der erste Grenzwert von 8°, und die Kristallorientierungswerte der zweiten Schaufeln 21,... 25, 31,...37 wenigstens gleich diesem ersten Grenzwert, wobei die Kristallorientierungswerte der ersten zweiten Schaufeln 21,... 25 kleiner als der zweite Grenzwert von 12° sind und die Kristallorientierungswerte der zweiten zweiten Schaufeln 31,...37 wenigstens gleich diesem zweiten Grenzwert sind.

Das Schaufelgitter besteht somit aus einem ersten Sektor 1, der aus den vier aufeinanderfolgenden ersten Schaufeln 14, 12, 11 und 13 besteht, und einem zweiten Sektor 2+3, der aus den 12 aufeinanderfolgenden zweiten Schaufeln 22, 21, 23, 24, 25; 31, 34, 36, 37, 33, 32 und 35 besteht. Der zweite Sektor besteht seinerseits aus einem ersten zweiten Sektor 2, der aus den fünf aufeinanderfolgenden ersten zweiten Schaufeln 22, 21, 23, 24 und 25 besteht, und einem zweiten zweiten Sektor 3, der aus den sieben aufeinanderfolgenden zweiten zweiten Schaufeln 31, 34, 36, 37, 33, 32 und 35 besteht.

Der erste Grenzwert von 8° beträgt 53% des maximalen Kristallorientierungswertes des Schaufelgitters von 15°, also wenigstens 25% und höchstens 75%. Der zweite Grenzwert von 12° beträgt 80% des maximalen Kristallorientierungswertes des Schaufelgitters von 15°, also ebenfalls wenigstens 25%, aber nur höchstens 90% des maximalen Kristallorientierungswertes des Schaufelgitters von 15°.

Die vier Schaufeln 14, 12, 11 und 13 des ersten Sektors 1 bilden 25% der Anzahl von 16 Schaufeln des Schaufelgitters, die fünf Schaufeln 22, 21, 23, 24 und 25 des ersten zweiten Sektors 2 bilden 31% der Anzahl von 16, und die sieben Schaufeln 31, 34, 36, 37, 33, 32 und 35 des zweiten zweiten Sektors 3 bilden 43% der Anzahl von 16.

Obwohl in der vorhergehenden Beschreibung exemplarische Ausführungen erläutert wurden, sei darauf hingewiesen, dass eine Vielzahl von Abwandlungen möglich ist.

Man erkennt beispielsweise, dass das Schaufelgitter virtuell auch in andere Sektoren mit je wenigstens drei aufeinanderfolgenden bzw. benachbarten Schaufeln geteilt werden kann. So kann beispielsweise virtuell auch eine Einteilung in einen ersten Sektor 1 = {14, 12, 11, 13}, einen anderen ersten zweiten Sektor 2' = {22, 21, 23} und einen anderen zweiten zweiten Sektor 3' = {24, 25, 31, 34, 36, 37, 33, 32, 35} erfolgen, oder gleichermaßen virtuell auch eine Einteilung in einen ersten Sektor 1 = {14, 12, 11, 13}, einen wiederum anderen ersten zweiten Sektor 2" = {22, 21, 23, 24, 25, 31} und einen wiederum anderen zweiten zweiten Sektor 3" = {34, 36, 37, 33, 32, 35}, wobei jeder dieser Sektoren wenigstens drei aufeinanderfolgende Schaufeln aufweist, deren Kristallorientierungen bzw. Kristallorientierungswerte kleiner als andere erste Grenzwerte bzw. diesen wenigstens gleich und zugleich kleiner als andere zweite Grenzwerte sind. Gleichwohl wird jeweils eine ausreichende Zusammenfassung von je wenigstens drei Schaufeln ähnlicher Kristallorientierungen dargestellt. Für die Verwirklichung der vorstehend erläuterten Merkmale reicht es im Sinne der vorliegenden Erfindung aus, wenn wenigstens eine entsprechende virtuelle Einteilung möglich ist, bei der die jeweiligen Merkmale, insbesondere in Hinblick auf Anzahl, Größe und/oder Verteilung von Schaufeln, Grenzwerten und/oder Sektoren, erfüllt ist.

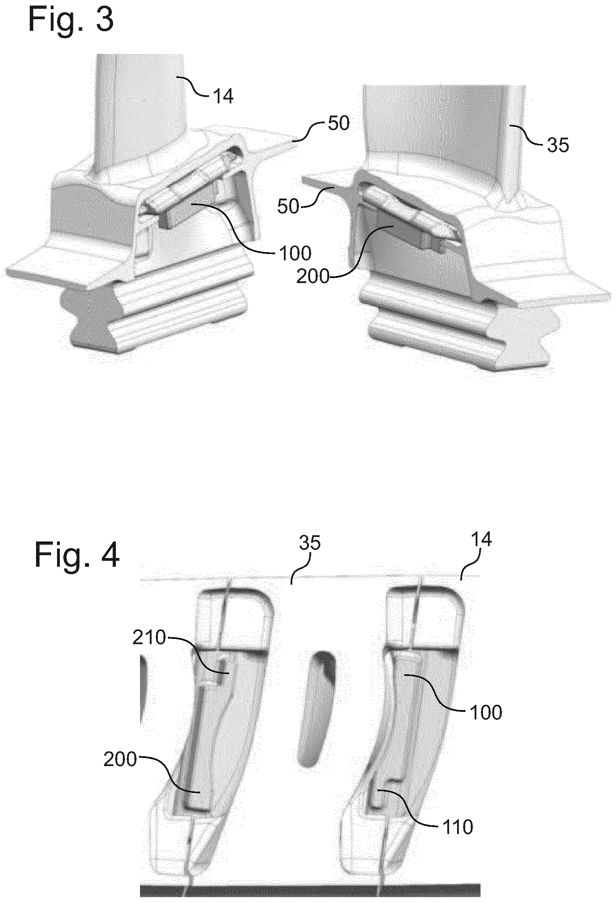

Fig. 3 zeigt Teile von zwei in Umfangsrichtung benachbarten Schaufeln 14, 35 eines Schaufelgitters einer Turbomaschine nach einer Ausführung der vorliegenden Erfindung in einer perspektivischen Ansicht, Fig. 4 eine Ansicht von radial innen auf die Schaufeln der Fig. 3.

Die Ausführung der Fig. 3, 4 entspricht bis auf die nachfolgend erläuterten Unterschiede der Ausführung der Fig. 2, so dass auf deren Beschreibung Bezug genommen und nachfolgend nur auf Unterschiede eingegangen wird.

Bei der Ausführung der Fig. 3, 4 weisen alle Schaufeln 11,...14, 21,...25, 31,...37 jeweils eine Schaufelplattform 50 und eine Körperanordnung mit einem ersten Körper 100 oder zweiten Körper 200 auf, der jeweils in einem Hohlraum mit Reibungsspiel im Wesentlichen in Axialrichtung beweglich gelagert ist, der zwischen der Schaufelplattform der jeweiligen Schaufel und der Schaufelplattform der ihr in Umfangsrichtung benachbarten Schaufel ausgebildet bzw. angeordnet ist.

Die ersten und zweiten Körper sind baugleich, jedoch mit entgegengesetzter Orientierung in dem jeweiligen Hohlraum angeordnet: bei den ersten Körpern 100 ist, wie insbesondere in der Ansicht von radial innen der Fig. 4 erkennbar, eine Nase 110 stromabwärts angeordnet, bei den um 180° verdreht eingesetzten zweiten Körpern 200 ist diese Nase 210 entsprechend stromaufwärts angeordnet.

Bei der Ausführung der Fig. 3, 4 sind an allen Schaufeln 11,...14 erste Körper 100 und an allen Schaufeln 21,..,25, 31,...37 zweite Körper 200 angeordnet, wobei zwischen den Körpern 13 und 22 sowie 14 und 35 wahlweise ein erster oder zweiter Körper angeordnet sein kann. In einer anderen Ausführung sind an allen Schaufeln 11,...14, 21,...25 erste Körper 100 und an allen Schaufeln 31,...37 zweite Körper 200 angeordnet, wobei zwischen den Körpern 25 und 31 sowie 14 und 35 wahlweise ein erster oder zweiter Körper angeordnet sein kann.

### Bezugszeichenliste

- 1: erster Sektor
- 2; 2'; 2": erster zweiter Sektor
- 3; 3'; 3": zweiter zweiter Sektor
- 11,...14: erste Schaufel
- 21,...25: erste zweite Schaufel
- 31,...37: zweite zweite Schaufel
- 50: Schaufelplattform
- 100: erster Körper
- 200: zweiter Körper
- 110; 210: Nase

## Patentansprüche

1. Schaufelgitter für eine Turbomaschine, mit einer Anzahl von Schaufeln (11,...14; 21,...25; 31,...37), die einen monokristallinen Werkstoff aufweisen, wobei jede Schaufel einen Kristallorientierungswert (|α|) aufweist, der von einer Kristallorientierung des monokristallinen Werkstoffs der Schaufel abhängt; und wobei die Kristallorientierungswerte erster Schaufeln (11,....14) kleiner als ein erster Grenzwert sind und die Kristallorientierungswerte zweiter Schaufeln (21,...25; 31,...37) wenigstens gleich dem ersten Grenzwert sind;
**dadurch gekennzeichnet, dass**
wenigstens eine erste Schaufel eine erste Körperanordnung mit wenigstens einem an der ersten Schaufel beweglich gelagerten ersten Körper; und wenigstens eine zweite Schaufel eine hiervon verschiedene zweite Körperanordnung mit wenigstens einem an der zweiten Schaufel beweglich gelagerten zweiten Körper aufweist.

2. Schaufelgitter nach dem vorhergehenden Anspruch, **dadurch gekennzeichnet, dass** jeder erste Körper beweglich an einer ersten Schaufel gelagert ist; und/oder jeder zweite Körper beweglich an einer zweiten Schaufel gelagert ist; und/oder an jeder ersten Schaufel wenigstens ein erster Körper beweglich gelagert ist; und/oder an jeder zweiten Schaufel wenigstens ein zweiter Körper beweglich gelagert ist.

3. Schaufelgitter nach einem der beiden vorhergehenden Ansprüche, **dadurch gekennzeichnet, dass** erste und zweite Körperanordnungen eine unterschiedliche Anzahl von Körpern und/oder Körper unterschiedlicher Größe, Masse, Massenverteilung, Form, Orientierung und/oder Lagerung aufweisen.

4. Schaufelgitter nach einem der drei vorhergehenden Ansprüche, **dadurch gekennzeichnet, dass** wenigstens einer der Körper an einer Schaufelplattform oder einem Außendeckband einer Schaufel beweglich gelagert ist.

5. Schaufelgitter nach einem der vorhergehenden Ansprüche, **dadurch gekennzeichnet, dass** das Schaufelgitter
wenigstens einen ersten Sektor (1), der aus wenigstens drei aufeinanderfolgenden ersten Schaufeln (14, 12, 11, 13) besteht, und
wenigstens einen zweiten Sektor (2+3; 2'+3'; 2"+3") aufweist, der aus wenigstens drei aufeinanderfolgenden zweiten Schaufeln (22, 21, 23, 24, 25; 31, 34, 36, 37, 33, 32, 35) besteht.

6. Schaufelgitter nach Anspruch 5, **dadurch gekennzeichnet, dass** das Schaufelgitter aus einem, zwei oder drei ersten Sektor(en) und einem, zwei oder drei zweiten Sektor(en) besteht.

7. Schaufelgitter nach Anspruch 5, **dadurch gekennzeichnet, dass** die Kristallorientierungswerte erster zweiter Schaufeln (21,...25) kleiner als ein zweiter Grenzwert sind und die Kristallorientierungswerte zweiter zweiter Schaufeln (31,...37) wenigstens gleich dem zweiten Grenzwert sind; und dass das Schaufelgitter wenigstens einen ersten zweiten Sektor (2; 2'; 2"), der aus wenigstens drei aufeinanderfolgenden ersten zweiten Schaufeln (22, 21, 23, 24, 25) besteht, und wenigstens einen zweiten zweiten Sektor (3; 3'; 3") aufweist, der aus wenigstens drei aufeinanderfolgenden zweiten zweiten Schaufeln (31, 34, 36, 37, 33, 32, 35) besteht.

8. Schaufelgitter nach dem vorhergehenden Anspruch, **dadurch gekennzeichnet, dass** das Schaufelgitter aus einem, zwei oder drei ersten Sektor(en), einem, zwei oder drei ersten zweiten Sektor(en) und einem, zwei oder drei zweiten zweiten Sektor(en) besteht.

9. Schaufelgitter nach einem der vier vorhergehenden Ansprüche, **dadurch gekennzeichnet, dass** ein Grenzwert wenigstens 10%, insbesondere wenigstens 25%, und/oder höchstens 90%, insbesondere höchstens 75% eines maximalen Kristallorientierungswertes des Schaufelgitters beträgt.

10. Schaufelgitter nach einem der fünf vorhergehenden Ansprüche, **dadurch gekennzeichnet, dass** die Schaufeln eines Sektors wenigstens 20%, insbesondere wenigstens 35%, und/oder höchstens 80%, insbesondere höchstens 65% der Anzahl der Schaufeln des Schaufelgitters bilden.

11. Schaufelgitter nach einem der sechs vorhergehenden Ansprüche, **dadurch gekennzeichnet, dass** die Kristallorientierungswerte der Schaufeln eines Sektors regelmäßig, insbesondere in einer monotonen Reihenfolge, oder unregelmäßig angeordnet sind.

12. Schaufelgitter nach einem der sieben vorhergehenden Ansprüche, **dadurch gekennzeichnet, dass** die Kristallorientierung des monokristallinen Werkstoffs von einer Abweichung einer Kristallrichtung, insbesondere der [001]-Richtung oder [100]-Richtung, des monokristallinen Werkstoffs von einer Profilrichtung, insbesondere einer Stapelachse oder Profilsehne, eines Schaufelblattes der Schaufel abhängt.

13. Turbomaschine, insbesondere Gasturbine, mit wenigstens einem Schaufelgitter, insbesondere einem Lauf- oder Leitgitter einer Turbinen- oder Verdichterstufe, nach einem der vorhergehenden Ansprüche.

14. Verfahren zur Herstellung eines Schaufelgitters nach einem der vorhergehenden Ansprüche, mit dem Schritt:
bewegliches Lagern wenigstens eines ersten Körpers einer ersten Körperanordnung an wenigstens einer ersten Schaufel und wenigstens eines zweiten Körpers einer hiervon verschiedenen zweiten Körperanordnung an wenigstens einer zweiten Schaufel.

15. Verfahren nach dem vorhergehenden Anspruch, ferner umfassend die Schritte:
Sortieren von Schaufeln entsprechend ihrer Kristallorientierung; und
Anordnen der sortierten Schaufeln in Sektoren entsprechend ihrer Kristallorientierungswerte.

## Claims

1. A blade row for a turbomachine having a plurality of blades (11,...14; 21,...25; 31,...37) exhibiting a monocrystalline material, wherein each blade has a crystal orientation value (|α|) which depends on a crystal orientation of the monocrystalline material of the blade; and wherein the crystal orientation values of first blades (11,...14) are lower than a first limiting value and the crystal orientation values of second blades (21,...25; 31,..,37) are at least equal to the first limiting value;
**characterized in that**
at least a first blade exhibits a first body assembly having at least one first body movably mounted to the first blade; and at least a second blade exhibits a second body assembly different therefrom, having at least one second body movably mounted to the second blade.

2. A blade row according to the preceding claim, **characterized in that** each first body is movably mounted to a first blade; and/or each second body is movably mounted to a second blade; and/or at least one first body is movably mounted to each first blade; and/or at least a second body is movably mounted to each second blade.

3. A blade row according to any one of the two preceding claims, **characterized in that** the first and the second body have a different number of bodies and/or bodies of different size, mass, mass distribution, form, orientation and/or bearing.

4. A blade row according to any of the three preceding claims, **characterized in that** at least one of the bodies is movably mounted to a blade platform or an outer shroud of a blade.

5. A blade row according to any of the preceding claims, **characterized in that** the blade row consists of at least a first sector (1) consisting of at least three consecutive first blades (14, 12, 11, 13) and
exhibits at least a second sector (2+3; 2'+3'; 2"+3") consisting of at least three consecutive second blades (22, 21, 23, 24, 25; 31, 34, 36, 37, 33, 32, 35).

6. A blade row according to claim 5, **characterized in that** the blade row consists of one, two or three first sector(s) and one, two or three second sector(s).

7. A blade row according to claim 5, **characterized in that** the crystal orientation values of first second blades (21,...25) are lower than a second limiting value and the crystal orientation values of second second blades (31,...37) are least equal to the second limiting value; and that the blade row exhibits at least a first second sector (2; 2'; 2") consisting of at least three consecutive first second blades (22, 21, 23, 24, 25) and exhibits at least a second second sector (3; 3'; 3") consisting of at least three consecutive second second blades (31, 34, 36, 37, 33, 32, 35).

8. A blade row according to the preceding claim, **characterized in that** the blade row consists of one, two or three first sector(s), one, two or three first second sector(s) and one, two or three second second sector(s).

9. A blade row according to any of the four preceding claims, **characterized in that** a limiting value amounts to at least 10 %, in particular at least 25 % and/or a maximum of 90 %, in particular a maximum of 75 % of a maximum crystal orientation value of the blade row.

10. A blade row according to any of the five preceding claims, **characterized in that** the blades of a sector constitute at least 20 %, in particular at least 35 % and/or a maximum of 80 %, in particular a maximum of 65 % of the number of blades of the blade row.

11. A blade row according to any of the six preceding claims, **characterized in that** the crystal orientation values of the blades of a sector are arranged in a regular manner, in particular in a monotonous sequence, or in an irregular manner.

12. A blade row according to any of the seven preceding claims, **characterized in that** the crystal orientation of the monocrystalline material depends on a divergence of a crystal direction, in particular the [001] direction or [100] direction of the monocrystalline material, from a profile direction, in particular a stacking axis or airfoil chord, of a blade leaf of the blade.

13. A turbomachine, in particular a gas turbine, having at least one blade row, in particular a rotating or stationary cascade of a turbine or compressor stage, according to any of the preceding claims.

14. A method for manufacturing a blade row according to any of the preceding claims using the step of:
movably mounting at least a first body of a first body assembly to at least a first blade and at least a second body of a second body assembly different therefrom to at least a second blade.

15. A method according to the preceding claim, further comprising the steps of:
assorting the blades according to their crystal orientation; and arranging the assorted blades in sectors according to their crystal orientation values.

## Revendications

1. Grille d'aube pour une turbomachine, avec un nombre d'aubes (11, ...14 ; 21, ...25 ; 31, ...37), qui présentent un matériau monocristallin,
dans laquelle chaque aube présente une valeur d'orientation des cristaux (]α[), qui dépend d'une orientation cristalline du matériau monocristallin de l'aube ; et
dans laquelle les valeurs d'orientation des cristaux de premières aubes (11, ...14) sont inférieures à une première valeur limite et les valeurs d'orientation des cristaux de deuxièmes aubes (21, ...25 ; 31, ...37) sont au moins identiques à la première valeur limite ;
**caractérisée en ce que**
au moins une première aube présente un premier agencement de corps avec au moins un premier corps logé de manière mobile au niveau de la première aube ; et
au moins une deuxième aube présente un deuxième agencement de corps différent de celui-ci avec au moins un deuxième corps logé de manière mobile au niveau de la deuxième aube.

2. Grille d'aube selon la revendication précédente, **caractérisée en ce que** chaque premier corps est logé de manière mobile au niveau d'une première aube ; et/ou chaque deuxième corps est logé de manière mobile au niveau d'une deuxième aube ; et/ou au moins un premier corps est logé de manière mobile au niveau de chaque première aube ; et/ou au moins un deuxième corps est logé de manière mobile au niveau de chaque deuxième aube.

3. Grille d'aube selon l'une quelconque des deux revendications précédentes, **caractérisée en ce que** des premier et deuxième agencements de corps présentent un nombre différent de corps et/ou des corps de différente taille, masse, distribution de masse, forme, orientation et/ou logement.

4. Grille d'aube selon l'une quelconque des trois revendications précédentes, **caractérisée en ce qu'**au moins un des corps est logé de manière mobile au niveau d'une plateforme d'aube ou d'une bande de recouvrement extérieure d'une aube.

5. Grille d'aube selon l'une quelconque des revendications précédentes, **caractérisée en ce que** la grille d'aube présente
au moins un premier secteur (1), qui se compose d'au moins trois premières aubes successives (14, 12, 11, 13), et
au moins un deuxième secteur (2+3 ; 2'+3' ; 2"+3"), qui se compose d'au moins trois deuxièmes aubes successives (22, 21, 23, 24, 25 ; 31, 34, 36, 37, 33, 32, 35).

6. Grille d'aube selon la revendication 5, **caractérisée en ce que** la grille d'aube se compose d'un, deux ou trois premier(s) secteur(s), et d'un, deux ou trois deuxième(s) secteur(s).

7. Grille d'aube selon la revendication 5, **caractérisée en ce que** les valeurs d'orientation des cristaux de premières deuxièmes aubes (21, ...25) sont inférieures à une deuxième valeur limite et les valeurs d'orientation des cristaux de deuxièmes deuxièmes aubes (31, ...37) sont au moins identiques à la deuxième valeur limite ; et **en ce que** la grille d'aube présente au moins un premier deuxième secteur (2 ; 2' ; 2"), qui se compose d'au moins trois premières deuxièmes aubes successives (22, 21, 23, 24, 25), et au moins un deuxième deuxième secteur (3 ; 3' ; 3"), qui se compose d'au moins trois deuxièmes deuxièmes aubes successives (31, 34, 36, 37, 33, 32, 35).

8. Grille d'aube selon la revendication précédente, **caractérisée en ce que** la grille d'aube se compose d'un, deux ou trois premier(s) secteur(s), d'un, deux ou trois premier(s) deuxième(s) secteur(s) et d'un, deux ou trois deuxième(s) deuxième(s) secteur(s).

9. Grille d'aube selon l'une quelconque des quatre revendications précédentes, **caractérisée en ce qu'**une valeur limite est d'au moins 10 %, en particulier d'au moins 25 %, et/ou au maximum de 90 %, en particulier au maximum de 75 % d'une valeur d'orientation des cristaux maximum de la grille d'aube.

10. Grille d'aube selon l'une quelconque des cinq revendications précédentes, **caractérisée en ce que** les aubes d'un secteur forment au moins 20 %, en particulier au moins 35 %, et/ou au maximum 80 %, en particulier au maximum 65 % du nombre d'aubes de la grille d'aube.

11. Grille d'aube selon l'une quelconque des six revendications précédentes, **caractérisée en ce que** les valeurs d'orientation des cristaux des aubes d'un secteur sont agencées de manière régulière, en particulier dans un ordre monotone ou de manière irrégulière.

12. Grille d'aube selon l'une quelconque des sept revendications précédentes, **caractérisée en ce que** l'orientation cristalline du matériau monocristallin dépend d'un écart d'une direction des cristaux, en particulier de la direction [001] ou de la direction [100], du matériau monocristallin par rapport à une direction de profil, en particulier un axe d'empilement ou une corde de profil, d'une pale d'aube de l'aube.

13. Turbomachine, en particulier turbine à gaz, avec au moins une grille d'aube, en particulier une grille mobile ou directrice d'un étage de turbine ou de compresseur, selon l'une quelconque des revendications précédentes.

14. Procédé de fabrication d'une grille d'aube selon l'une quelconque des revendications précédentes, avec l'étape de :
logement mobile d'au moins un premier corps d'un premier agencement de corps au niveau d'au moins une première aube et d'au moins un deuxième corps d'un deuxième agencement de corps différent de celui-ci au niveau d'au moins une deuxième aube.

15. Procédé selon la revendication précédente, comprenant en outre les étapes de :
tri d'aubes en fonction de l'orientation de leurs cristaux ; et
agencement des aubes triées en secteurs en fonction de leurs valeurs d'orientation des cristaux.
